(19) Europäisches Patentamt
European Patent Office
Office européen des brevets

(11) **EP 2 870 380 B1**

## (12) EUROPÄISCHE PATENTSCHRIFT

(45) Veröffentlichungstag und Bekanntmachung des Hinweises auf die Patenterteilung:
**30.10.2019 Patentblatt 2019/44**

(21) Anmeldenummer: **13733267.2**

(22) Anmeldetag: **26.06.2013**

(51) Int Cl.:
***F16F 15/14*** *(2006.01)*

(86) Internationale Anmeldenummer:
**PCT/EP2013/063415**

(87) Internationale Veröffentlichungsnummer:
**WO 2014/005907 (09.01.2014 Gazette 2014/02)**

(54) **FLIEHKRAFTPENDEL**

CENTRIFUGAL PENDULUM

PENDULE CENTRIFUGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.07.2012 DE 102012211794**
**20.12.2012 DE 102012223941**

(43) Veröffentlichungstag der Anmeldung:
**13.05.2015 Patentblatt 2015/20**

(73) Patentinhaber: **Schaeffler Technologies AG & Co. KG**
**91074 Herzogenaurach (DE)**

(72) Erfinder:
- **HOFFMANN, Jan**
  **76437 Rastatt (DE)**
- **SCHNÄDELBACH, David**
  **76534 Baden-Baden-Neuweier (DE)**
- **WERNER, Markus**
  **77815 Bühl (DE)**
- **DINGER, Christian**
  **77886 Lauf (DE)**

(56) Entgegenhaltungen:
EP-A1- 1 041 309      DE-A1-102010 049 553
DE-A1-102011 100 895      US-A1- 2011 180 358

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 870 380 B1

**Beschreibung**

Gegenstand der vorliegenden Erfindung ist ein Fliehkraftpendel, welches zur Unterdrückung von ungewollten Schwingungsmoden bei der Übertragung von Drehmomenten von einer Abtriebswelle zu einer Antriebswelle beispielsweise im Antriebsstrang eines Kraftfahrzeugs eingesetzt werden kann.

Fliehkraftpendel werden zur Unterdrückung von unerwünschten Schwingungen beim Übertragen von Drehmomenten von einer Abtriebswelle auf eine Antriebswelle eingesetzt. Hierzu weisen sie einen um eine Drehachse drehbaren Pendelflansch und mehrere, über den Umfang verteilte, gegenüber dem Pendelflansch begrenzt verschwenkbare Pendelmassen auf. Das entsprechende Rückstellmoment, welches das Fliehkraftpendel ausübt, wird dabei begrenzt durch die Pendelmasse und den Schwingwinkel. Gerade beim Einsatz im Antriebsstrang in Automobilen sind beide Parameter begrenzt durch den zur Verfügung stehenden Bauraum. Um insbesondere auch höhere Schwingungsmoden dämpfen zu können, wäre es notwendig, die Pendelmasse oder den Schwingwinkel zu erhöhen. Beides lassen die Platz und Gewichtsverhältnisse insbesondere in modernen Automobilen nicht zu. Ein gattungsgemäßes Fliehkraftpendel ist z.B. aus der DE102011100895 A1 bekannt.

Der vorliegenden Erfindung liegt deshalb die Aufgabe zugrunde, die aus dem Stand der Technik bekannten Nachteile zumindest teilweise zu überwinden und insbesondere ein Fliehkraftpendel vorzuschlagen, welches im Vergleich zu aus dem Stand der Technik bekannten Fliehkraftpendeln mit gleicher Pendelmasse und gleichem Schwingwinkel ein erhöhtes Rückstellmoment aufweist.

Diese Aufgabe wird gelöst mit den Merkmalen des unabhängigen Anspruchs. Abhängige Ansprüche sind auf vorteilhafte Weiterbildungen gerichtet.

Das erfindungsgemäße Fliehkraftpendel weist einen um eine Drehachse drehbaren Pendelflansch und mehrere über den Umfang verteilte, gegenüber dem Pendelflansch begrenzt verschwenkbare Pendelmassen auf. Es zeichnet sich dadurch aus, dass mindestens eine Pendelmasse ein Radialkraftelement aufweist, über welches eine radial nach außen wirkende Radialkraft auf ein in Umfangsrichtung betrachtetes Zentrum der Pendelmasse aufbringbar ist. Unter einem Zentrum der jeweiligen Pendelmasse kann zum einen der in Umfangsrichtung betrachtete zentrale Punkt der Pendelmasse verstanden werden, der also von beiden umfangsseitigen Enden der Pendelmasse gleich beabstandet ist. Alternativ oder zusätzlich kann unter dem Zentrum auch der Schwerpunkt der Pendelmasse verstanden werden. Bevorzugt wird der Begriff Zentrum als ein zentraler Drehpunkt oder Aufhängungspunkt der Pendelmasse verstanden. Bei einem aus dem Stand der Technik bekannten Fliehkraftpendel bestimmt sich das Rückstellmoment M in Abhängigkeit von der Masse m der Pendelmasse, dem Abstand d der Pendelmasse von der Drehachse, der entsprechenden Winkelgeschwindigkeit $\Omega$ und dem Radius R des Zentrums, beispielsweise der Pendelrollenmitte, der Pendelmasse von der Drehachse. Das Rückstellmoment M ist das Produkt der auf die Pendelmasse wirkenden Kraft F, dem Radius R des Zentrums der Pendelmasse zur Drehachse und dem Sinus des Schwingwinkels $\varphi$:

$$M = F\ R\ \sin\ \varphi$$

Bei einem aus dem Stand der Technik bekannten Fliehkraftpendel handelt es sich bei der Kraft F um die Zentrifugalkraft, die durch die Pendelmasse erreicht wird. Bei einem Fliehkraftpendel nach der vorliegenden Erfindung wird nunmehr zusätzlich zu dieser Zentrifugalkraft noch eine Radialkraft aufgebracht. F ist also dabei die Summe der Zentrifugalkraft $F_{zf}$ und der Radialkraft $F_R$

$$F = F_{zf} + F_R$$

Erfindungsgemäß wirkt die Radialkraft $F_R$ radial nach außen und weist somit in dieselbe Richtung wie die Zentrifugalkraft $F_{zf}$. Dadurch erhöht sich das Rückstellmoment entsprechend:

$$M = (F_{zf} + F_R)\ R\ \sin\ \varphi$$

Folglich kann durch das Einbringen eines solchen Radialkraftelements die Größe des Rückstellmoments entsprechend erhöht werden, ohne dass mehr Bauraum in Anspruch genommen wird. Das Radialkraftelement kann dabei auf eine Pendelmasse oder auf mehrere oder sogar alle Pendelmassen wirken. Es ist möglich, dass jeder Pendelmasse ein Radialkraftelement zugeordnet ist.

Gemäß einer vorteilhaften Ausgestaltung weist das Radialkraftelement mindestens ein Federelement auf.

Unter einem Federelement werden Bauteile verstanden, die eine Federkraft aufweisen, also bei einer Entlastung eine elastische Verformung erfahren. Unter einem Federelement werden zum einen klassische Federn wie Spiralfedern, Blattfedern und ähnliches, zum anderen aber auch Elemente verstanden, die beispielsweise durch eine elastische Vorspannung eine Rückstellkraft aufbringen können. Insbesondere kann das Radialkraftelement ein einzelnes Federelement oder auch mehrere Federelemente

Gemäß einer vorteilhaften Ausgestaltung des Fliehkraftpendels ist das Radialkraftelement in der Führung eines zentralen Verbindungselementes der Pendelmasse mit dem Pendelflansch ausgebildet.

Durch die Ausbildung des Radialkraftelements in der Führung eines zentralen Verbindungselements kann auf einfache Art und Weise die Ausübung einer Radialkraft radial nach außen auf die Pendelmasse erreicht werden. Üblicherweise weist die Pendelmasse einen Kreisbogen oder Kreisbogenabschnitt zur Führung der Pendelmasse auf. In diesen integriert kann so ein Radialkraftelement beispielsweise in Form einer Feder eingebracht werden, die eine entsprechende Radialkraft nach außen ausübt. Unter einem Verbindungselement wird insbesondere ein Lager, eine Rolle oder ähnliches verstanden, mit dem die Pendelmasse beweglich am Pendelflansch befestigt ist.

Erfindungsgemäß weist das Radialkraftelement eine Führungskontur zur Führung eines zentralen Verbindungselements der Pendelmasse mit dem Pendelflansch auf.

Hier kann in vorteilhafter Weise das Radialkraftelement gleichzeitig die Funktion der Führung der Pendelmasse ausüben. Dies kann beispielsweise dadurch erfolgen, dass eine entsprechende Feder als Radialkraftelement ausgebildet wird, die am radial äußeren Rand eine Führungsschiene für eine Rolle oder ein Lager der Pendelmasse aufweist.

Erfindungsgemäß ist die Führungskontur so ausgebildet, dass ein vorgebbarer Verlauf der Radialkraft in Abhängigkeit vom Auslenkwinkel des Verbindungselements erreicht wird. So kann das Rückstellmoment gezielt in Abhängigkeit vom Auslenkwinkel des Verbindungselements beziehungsweise der Pendelmasse eingestellt werden, so dass gezielt bestimmte Schwingungsmoden gedämpft werden können. Dies kann durch eine entsprechende Gestaltung der Führungskontur gemeinsam mit der bekannten Kennlinie beispielsweise der entsprechenden Feder als Radialkraftelement auf einfache Art und Weise erreicht werden.

Bevorzugt ist eine Ausgestaltung, bei der das Radialkraftelement mindestens ein Federelement ausgewählt aus mindestens einer der folgenden Federn umfasst:

     a) mindestens eine Blattfeder;
     b) mindestens eine Spiralfeder; und
     c) mindestens eine Schneckenfeder.

Durch die Vorgabe der Kontur der Blattfeder, sowie die Materialwahl und die Wahl der Dicke und der Krümmung der Blattfeder kann ein definierter Verlauf der Radialkraft in Abhängigkeit vom Auslenkwinkel einfach erreicht werden. Zudem sind Blattfedern grundsätzlich preiswert und einfach herstellbar und ermöglichen so auf einfache Art und Weise eine kostengünstige Herstellung des entsprechenden Fliehkraftpendels. Zudem können Blattfedern platzsparend eingesetzt werden.

Spiralfedern können auf einfache Art und Weise in die bekannten und bestehenden Führungen von Pendelmassen integriert werden und können so bauraumneutral als Radialkraftelement in entsprechenden Fliehkraftpendeln dienen. Hierbei ist es möglich, eine oder mehrere Spiralfedern am radial äußeren Rand mit einer entsprechenden Führungskontur zu versehen, in der eine Rolle beziehungsweise ein Lager der entsprechenden Pendelmasse beweglich ist. Bevorzugt ist eine Ausgestaltung mit mehreren Spiralfedern, die besonders bevorzugt in Umfangsrichtung zwischen benachbarten Pendelmassen und insbesondere zwischen allen Pendelmassen ausgebildet sind.

Unter einer Schneckenfeder wird hier ein spiralförmig im Wesentlichen in einer Ebene aufgewickeltes Stück Blech verstanden. Mit einer Schneckenfeder ist es in einfacher Weise möglich, mit einem einzigen Federelement ein Radialkraftelement für alle Pendelmassen auszubilden.

Gemäß einer vorteilhaften Ausgestaltung weist das Radialkraftelement mindestens ein Federelement auf, welches zumindest zwei in Umfangsrichtung benachbarte Pendelmassen miteinander koppelt.

Insbesondere durch die Kopplung aller Pendelmassen durch entsprechende Federelemente, wie beispielsweise Blattfedern, vorgespannte Elemente und/oder Spiralfedern kann ein Radialkraftelement geschaffen werden, welches eine radial nach außen wirkende Radialkraft auf ein in Umfangsrichtung betrachtetes Zentrum der Pendelmasse aufbringt. Die Pendelmassen weisen bevorzugt entsprechende Vorsprünge oder Ausnehmungen auf, mit denen die Federelemente verbindbar sind.

Gemäß einem weiteren Aspekt wird eine Reibkupplung umfassend mindestens ein erfindungsgemäßes Fliehkraftpendel vorgeschlagen.

Die Reibkupplung ist insbesondere für einen Antriebsstrang eines Kraftfahrzeugs vorgesehen, es ist jedoch alternativ auch möglich, die Reibkupplung für Industrieanwendungen einzusetzen. Die Reibkupplung kann einerseits als Einfachkupplung ausgebildet sein, das heißt nur eine einzige Anpressplatte, eine einzige Gegendruckplatte und zumindest eine zwischen der Anpressplatte und der Gegendruckplatte klemmbare Kupplungsscheibe aufweisen, sie kann jedoch auch als Mehrfachkupplung, bevorzugt als Doppelkupplung ausgebildet sein. Bei einer Doppelkupplung teilen sich zwei Teilkupplungen vorzugsweise eine gemeinsame Gegendruckplatte, die in diesem Zusammenhang auch als Zentralplatte bezeichnet wird.

Die Reibkupplung kann gleichermaßen als gedrückte Reibkupplung ausgebildet sein, das heißt als eine Reibkupplung, bei der eine auf die Betätigungseinrichtung einwirkende Aktoreinrichtung eine drückende Kraft auf den Tellerfederabschnitt ausübt oder als gezogene Reibkupplung, das heißt als Reibkupplung, bei der die Aktoreinrichtung eine ziehende Kraft auf den Tellerfederabschnitt ausübt. Die Reibkupplung kann einerseits als trockene Reibkupplung und andererseits als nasse Reibkupplung ausgebildet sein. Insbesondere bei nassen Reibkupplungen sind als Kupplungsscheiben vorzugsweise innere und äußere Lamellenpakete vorgesehen.

Ist die Kupplungsscheibe im eingerückten Zustand der Reibkupplung zwischen der Anpressplatte und der Gegendruckplatte verspannt, so erfolgt eine reibschlüssige Übertragung des Drehmoments von der Eingangsseite der Reibungskupplung über die Anpressplatte und die Gegendruckplatte auf die Kupplungsscheibe und von der Kupplungsscheibe auf die Ausgangsseite der Reibkupplung, beispielsweise auf die Antriebswelle eines Getriebes. Zur Drehmomentübertragung auf die Kupplungsscheibe sind Gegendruckplatte und Anpressplatte unmittelbar oder mittelbar drehfest miteinander verbunden. Beispielsweise sind hierzu Blattfedern, vorzugsweise gleichmäßig über den Umfang der Reibkupplung verteilt vorgesehen, durch die die Anpressplatte drehfest, aber in axialer Richtung der Reibkupplung begrenzt beweglich, an die Gegendruckplatte angebunden ist. Durch diese Blattfedern ist die Anpressplatte vorzugsweise von der Gegendruckplatte weg vorgespannt.

Weiterhin wird ein Kraftfahrzeug vorgeschlagen, aufweisend eine Antriebseinheit mit einer Abtriebswelle, einem Antriebsstrang und einer Kupplung zum lösbaren Verbinden der Abtriebswelle mit dem Antriebsstrang, wobei die Kupplung mindestens ein erfindungsgemäßes Fliehkraftpendel aufweist.

Die in den Patentansprüchen einzeln aufgeführten Merkmale sind in beliebiger, technologisch sinnvoller Weise miteinander kombinierbar und können durch erläuternde Sachverhalte aus der Beschreibung und Details aus den Figuren ergänzt werden, wobei weitere Ausführungsvarianten der Erfindung aufgezeigt werden.

Im Folgenden wird die Erfindung anhand der beiliegenden Figuren näher erläutert, ohne auf die dort gezeigten Details und Ausführungsbeispiele beschränkt zu sein. Es zeigen schematisch:

Fig. 1:      eine Prinzipskizze zur Verdeutlichung der anliegenden Kräfte in einem Fliehkraftpendel;

Fig. 2:      ein erstes Beispiel eines Fliehkraftpendels in Draufsicht;

Fig. 3:      ein Detail des ersten Beispiels in Draufsicht;

Fig. 4:      das Detail des ersten Beispiels in einer weiteren Ansicht;

Fig. 5:      ein Detail des ersten Beispiels in ausgelenkter Position;

Fig. 6:      ein zweites Beispiel eines Fliehkraftpendels;

Fig. 7:      ein drittes Beispiel eines Fliehkraftpendels;

Fig. 8:      ein viertes Beispiel eines Fliehkraftpendels;

Fig. 9:      eine Skizze des vierten Beispiels eines Fliehkraftpendels in verschiedenen Auslenkungen;

Fig. 10:      ein Kraftfahrzeug mit einem entsprechenden Fliehkraftpendel;

Fig. 11 - 12:      zwei Ansichten eines fünften Beispiels eines Fliehkraftpendels;

Fig. 13 - 15      drei Ansichten eines sechsten Beispiels eines Fliehkraftpendels;

Fig. 16 - 18:      drei Ansichten eines siebten Beispiels eines Fliehkraftpendels;

Fig. 19 - 20      ein achtes Beispiel eines Fliehkraftpendels;

Fig. 21 - 22      ein neuntes Beispiel eines Fliehkraftpendels;

Fig. 23 - -24      ein zehntes Beispiel eines Fliehkraftpendels;

Fig. 25 - 27      ein elftes Beispiel eines Fliehkraftpendels;

Fig. 28 - 30:      ein zwölftes Beispiel eines Fliehkraftpendels in verschiedenen Ansichten; und

Fig. 31 - 32      ein dreizehntes Beispiel eines Fliehkraftpendels in Detailansichten.

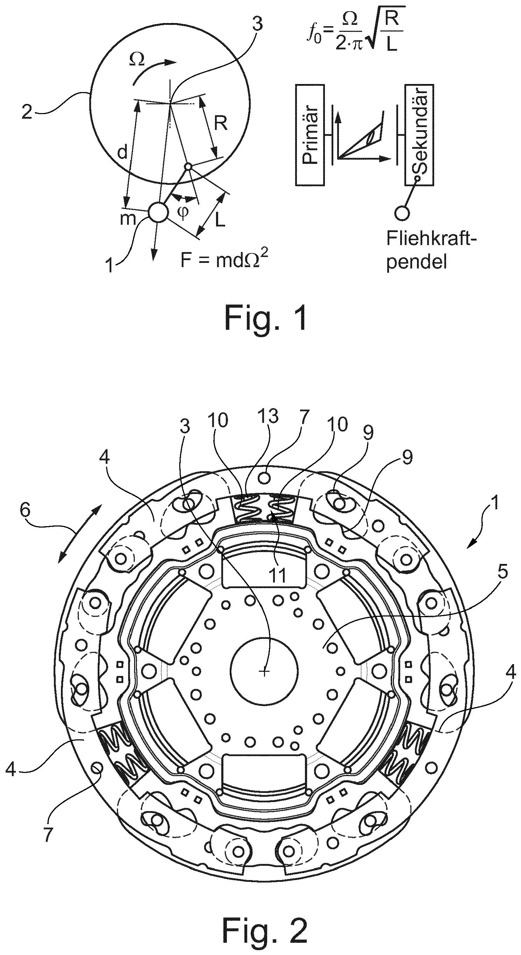

Fig. 1 zeigt schematisch die Wirkungsweise eines Fliehkraftpendels 1. Es ist an einer rotierenden Masse 2 befestigt. Diese kann Teil einer Kupplung zur lösbaren Verbindung einer hier nicht gezeigten Abtriebswelle einer Antriebseinheit mit einem Antriebsstrang beispielsweise eines Automobils eingesetzt werden. Das Fliehkraftpendel 1 kann dabei sowohl primärseitig als auch sekundärseitig eingesetzt werden, bevorzugt ist eine Ausgestaltung, bei der das Fliehkraftpendel 1 sekundärseitig ausgebildet ist. Die Kupplung dient dabei zum Übertragen eines Drehmoments von einer Abtriebswelle zu einem Antriebsstrang. Das Fliehkraftpendel 1 weist dabei Pendelmassen auf, die jeweils die Masse m aufweisen. Bevorzugt wird unter der Masse m die Gesamtmasse verstanden, also die Masse der eigentlichen Pendelmasse sowie der verwendeten Nieten und gegebenenfalls Rollen oder Lager zur Fixierung und Lagerung der Pendelmasse. Hier wirkt eine Zentrifugalkraft $F_{zf}$ aufgrund der Rotation mit einer Winkelgeschwindigkeit $\Omega$ um eine Drehachse 3, die als das Produkt der Masse m, dem Wirkradius d, das heißt dem effektiven Rotationsradius der Pendelmasse m um die Drehachse 3 und dem Quadrat der Rotationskreisfrequenz Ω berechnet wird. Hierbei lässt sich der Wirkradius d als die Summe des Radius R bis zum Zentrum der Pendelmasse 4 und dem Produkt einer Pendellänge L und Sinus des Auslenkwinkels φ berechnen. Sofern nun ein Radialkraftelement ausgebildet ist, wie dies in den weiteren Figuren gezeigt wird, so wirkt bei der Bildung des Rückstellmoments M nicht nur die Zentrifugalkraft $F_{Zf}$ sondern zusätzlich die Radialkraft $F_R$, die radial nach außen wirkt und die sich beispielsweise aus einer Federkraft oder ähnlichem ergibt.

Fig. 2 zeigt schematisch ein erstes Beispiel eines Fliehkraftpendels 1. Dieses weist einen um eine Drehachse 3 drehbaren Pendelflansch 5 auf. Das Fliehkraftpendel 1 umfasst weiterhin mehrere über den Umfang des Pendelflanschs 5 verteilte und gegenüber dem Pendelflansch 5 begrenzt verschwenkbare Pendelmassen 4 auf. Im in Fig. 2 gezeigten Beispiel handelt es sich um drei Pendelmassen 4, die symmetrisch um den Umfang des Pendelflanschs 5 verteilt sind. Jede Pendelmasse 4 weist ein in Umfangsrichtung 6 betrachtetes Zentrum 7 auf. Im vorliegenden Beispiel ist das Zentrum 7 das jeweilige zentrale Lager der Pendelmasse 4. Weiterhin weist jede Pendelmasse 4 außen liegende Rollen 8 auf, die durch Bewegung in Führungskonturen 9 entsprechende Auslenkungen der Pendelmasse ermöglichen.

Das hier gezeigte Beispiel weist als Radialkraftelement bei jeder Pendelmasse 4 zwei Spiralfedern 10 auf. Durch diese Spiralfedern 10 wird eine Radialkraft $F_R$ radial nach außen auf das Zentrum 7 der jeweiligen Pendelmasse 4 aufgebracht. Das jeweilige gesamte Radialkraftelement 11 weist neben den Spiralfedern 10 im vorliegenden Ausführungsbeispiel Führungskonturen 12 auf, die entsprechende Schienen darstellen, in denen sich das zentrale Lager der jeweiligen Pendelmasse 4 bewegen kann. Über entsprechende Stifte 13 ist die Führungskontur 12 mit den Spiralfedern 10 verbunden. Durch entsprechende Ausgestaltung der jeweiligen Führungskontur 12 kann dabei erreicht werden, dass die Größe oder der Betrag der durch das Radialkraftelement 11 aufgebrachten Radialkraft in Abhängigkeit vom Auslenkwinkel φ variiert.

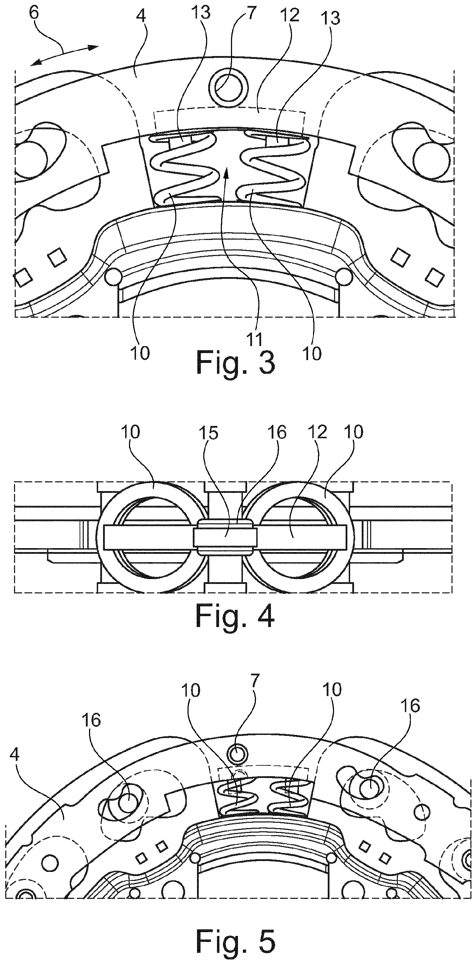

Fig. 3 zeigt schematisch ein Detail des entsprechenden Fliehkraftpendels 1 mit dem Radialkraftelement 11 mit zwei Spiralfedern 10, die eine Führungskontur 12 tragen, in der sich ein Zentrallager 14 als in Umfangsrichtung 6 betrachtetes Zentrum 7 der Pendelmasse 4 bewegen kann.

Fig. 4 zeigt das entsprechende Detail in Draufsicht. Das Zentrallager 14 weist eine entsprechende Kontaktfläche 15 zum Gleiten beziehungsweise Rollen des Zentrallagers 14 in der Führungskontur 12 auf.

Fig. 5 zeigt die entsprechende Pendelmasse 4 des Fliehkraftpendels 1 im ausgelenkten Zustand. Die Spiralfedern 10 sind dabei gestaucht und bringen entsprechend eine radial nach außen wirkende Radialkraft auf das Zentrum 7 auf. Im Vergleich zur Nullauslenkungslage, wie sie in den Fig. 2-4 gezeigt ist, ist das Zentrum 7 in der Führungskontur 12 verschoben. Entsprechend haben sich die weiteren Rollen 16 ebenfalls im Vergleich zur nicht ausgelenkten Position bewegt.

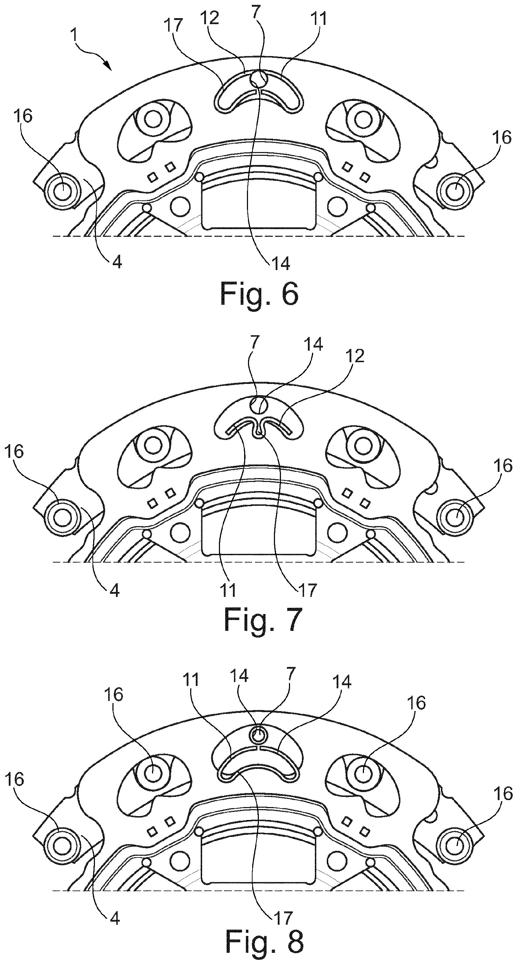

Die Fig. 6-8 zeigen schematisch weitere Beispiele eines Fliehkraftpendels 1. Als Radialkraftelement 11 weisen die entsprechenden Fliehkraftpendel 1 in diesen Beispielen Blattfedern 17 auf. Diese weisen unterschiedliche als Führungskontur 12 dienende Formen auf, die jeweils unterschiedliche und vorgebbare Verläufe der durch das Radialkraftelement 11 aufgebrachten Radialkraft in Abhängigkeit vom Auslenkwinkel φ bewirken. Die entsprechenden Blattfedern 17 lassen sich einfach und preiswert herstellen und können, wie insbesondere das Beispiel in Fig. 6 zeigt, ohne weitere konstruktive Änderungen in die üblicherweise bestehenden Führungen 18 für das Zentrallager 14 der Pendelmasse 4 eingebracht werden, so dass ohne weiteren Änderungen ein größeres Rückstellmoment M des Fliehkraftpendels 1 erreicht werden kann.

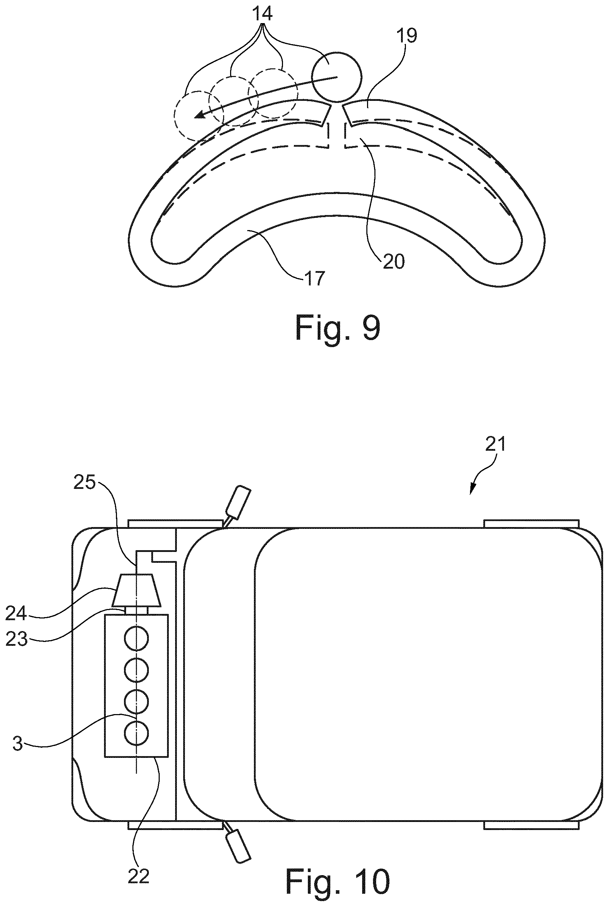

Fig. 9 zeigt schematisch den Effekt einer Auslenkung des Fliehkraftpendels 1 für ein Beispiel, in dem eine Blattfeder 17 als Teil eines Radialkraftelements 11 ausgebildet ist. Im nicht ausgelenkten Zustand des Fliehkraftpendels 1 folgt die Blattfeder 17 einem ersten Verlauf 19, der hier gefüllt dargestellt ist. Bei Auslenkung des Fliehkraftpendels 1 und damit des Zentrallagers 14 relativ zur Blattfeder 17 kommt es zu einer Verformung der Blattfeder 17 zu einem zweiten Verlauf 20. Das Zentrallager 14 ist im nicht ausgelenkten Zustand als gefüllter Kreis dargestellt, während im ausgelenkten Zustand mehrere Situationen jeweils als gepunktete Kreise dargestellt sind. Durch die Änderung der Kontur der Blattfeder 17 im nicht ausgelenkten Zustand mit erstem Verlauf 19 zum ausgelenkten Zustand mit zweitem Verlauf 20 kommt es zu einer Änderung der jeweiligen Radialkraft $F_R$ in Abhängigkeit vom Auslenkwinkel φ des Fliehkraftpendels 1. Dadurch kann eine Anpassung des Rückstellmoments M an bestimmte Auslenkwinkel φ und damit ein genau vorgebbarer Verlauf der Radialkraft $F_R$ und des Rückstellelements M erreicht werden.

Fig. 10 zeigt schematisch ein Kraftfahrzeug 21 mit einer Antriebseinheit 22, beispielsweise ein Verbrennungsmotor. Die Antriebseinheit 22 weist eine Abtriebswelle 23 auf, die über eine Kupplung 24 mit mindestens einem Fliehkraftpendel 1 mit einem Antriebsstrang 25 verbunden ist. Die Drehachse 3 definiert die oder eine Rotationsachse von Abtriebswelle 23, Kupplung 24 und Antriebsstrang 25. Bei der Kupplung 24 handelt es sich insbesondere um eine Reibkupplung, bei der das Drehmoment der Antriebseinheit 22 lösbar über Reibschluss und verschiedene Reibpartner von der Abtriebswelle 23 auf mindestens eine Antriebswelle im Antriebsstrang 25 übertragen wird.

Bei der Beschreibung der weiteren Beispiele wird auf die oben gemachten Ausführungen zu Fliehkraftpendeln Bezug genommen. Gleiche Elemente sind mit

gleichen Bezugzeichen versehen. Aus Gründen der Übersichtlichkeit sind nicht alle gleichen Elemente mit Bezugzeichen versehen.

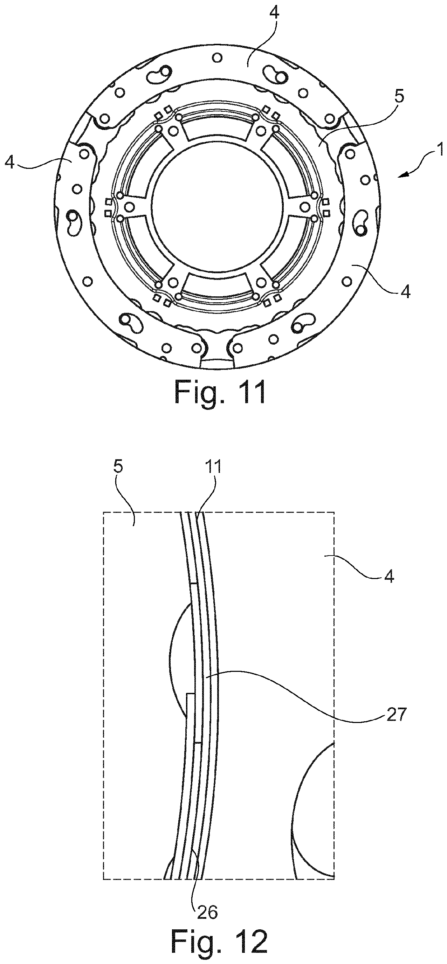

Fig. 11 und 12 zeigen ein fünftes Beispiel eines Fliehkraftpendels 1 mit einem Radialkraftelement 11 mit einem Federelement 27, welches als so genannte Schneckenfeder 26 ausgebildet ist. Unter einer Schneckenfeder 26 wird hier ein spiralförmig im Wesentlichen in einer Ebene aufgewickeltes Stück Blech verstanden. Die Schneckenfeder 26 ist dabei vorgespannt, so dass sie eine radial nach außen auf die Pendelmassen 4 wirkende Radialkraft aufbringt.

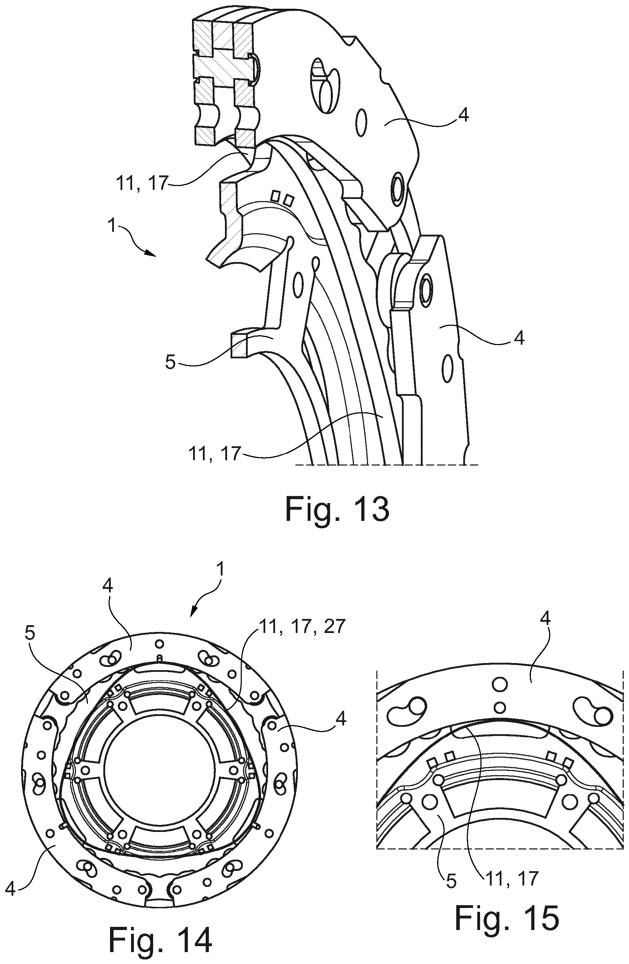

Fig. 13 bis 15 zeigt ein sechstes Beispiel eines Fliehkraftpendels 1 mit zwei Radialkraftelementen 11, die jeweils als Federelement 27 eine Blattfeder 17 umfassen. Im Gegensatz zu den oben beschriebenen Beispielen dient hier eine Blattfeder 17 als (gemeinsames) Radialkraftelement 11 für mehrere, hier drei Pendelmassen 4. Es sind zwei Radialkraftelemente 11 auf beiden Seiten des Pendelflansches 5 ausgebildet. Jede Blattfeder 17 ist vorgespannt und ist als so genannte Dreipunktfeder ausgestaltet, die an drei Punkten an den drei Pendelmassen 4 anliegt. Durch die Vorspannung üben die Blattfedern 17 jeweils eine nach außen wirkende Radialkraft auf die Pendelmassen 4 aus.

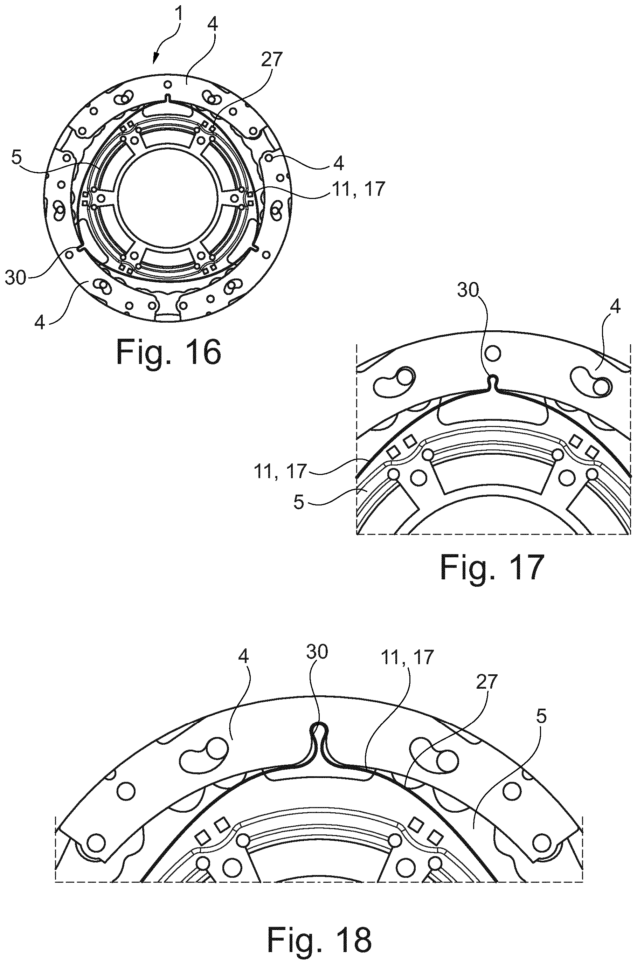

Fig. 16 bis 18 zeigt ein siebtes Beispiel eines Fliehkraftpendels 1, welches sich von dem sechsten Beispiel dadurch unterscheidet, dass die Blattfeder 17 mit Ösen 30 an den Pendelmassen 4 eingehängt ist, insbesondere an einem jeweiligen mittleren Bolzen 29 (siehe insbesondere Fig. 18), wodurch ein Formschluss zwischen Pendelmasse 4 und Blattfeder 17 beziehungsweise Radialkraftelement 11 erreicht wird.

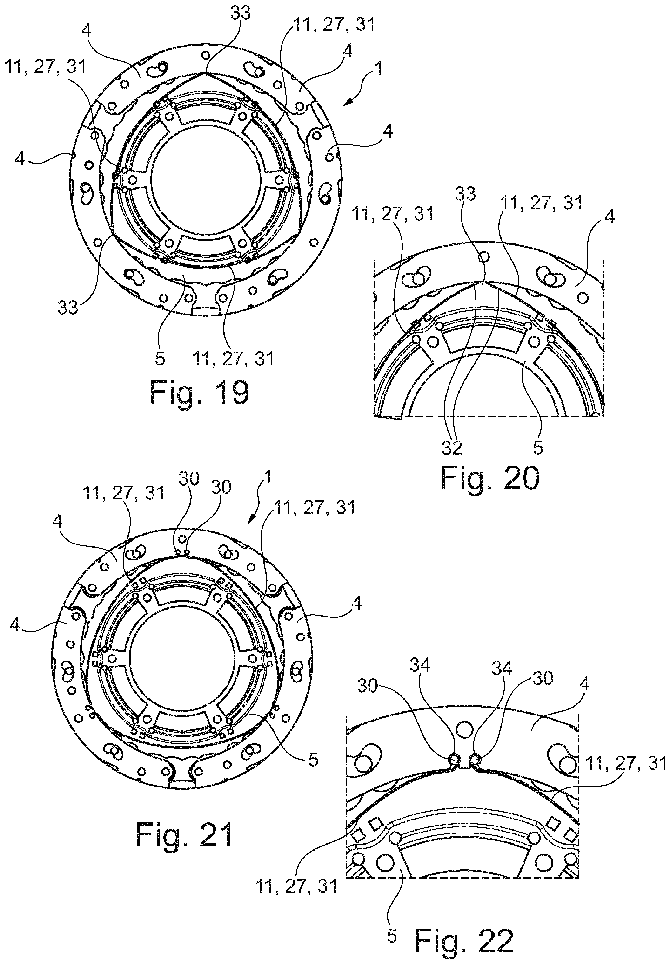

Fig. 19 bis 20 zeigt ein achtes Beispiel eines Fliehkraftpendels 1. Als Radialkraftelemente 11 sind hier drei Stabelemente 31 ausgebildet, die in der Ebene der Pendelmassen 4 ausgebildet und radial innen relativ zu den Pendelmassen 4 liegen Ein Stabelement 31 unterscheidet sich von einer Blattfeder 17 wie beispielsweise im siebten Beispiel insbesondere durch seinen Querschnitt, der im Unterschied zum Querschnitt einer Blattfeder 17 nicht im wesentlichen flach, sondern insbesondere rund ausgeführt ist. Mit jeweils einem Ende 32 liegt jedes Stabelement 31 an in Umfangsrichtung benachbarten Pendelmassen 4 an. Hierzu weisen die Pendelmassen 4 radial innen zentral einen Vorsprung 33 auf.

Fig. 21 bis 22 zeigen ein neuntes Beispiel eines Fliehkraftpendels 1, welches sich vom achten Beispiel des Fliehkraftpendels 1 dadurch unterscheidet, dass die Stabelemente 31 an den Pendelmassen 4 eingehängt sind. Dazu weisen die Stabelemente 31 an ihren Enden 32 Ösen 30 auf, die in jeweiligen Aussparungen 34 der Pendelmassen 5 eingehängt sind. Die Aussparungen 34 liegen dabei symmetrisch um das jeweilige Zentrallager 14 der Pendelmasse 5, um einen symmetrischen Kraftverlauf erzeugen zu können.

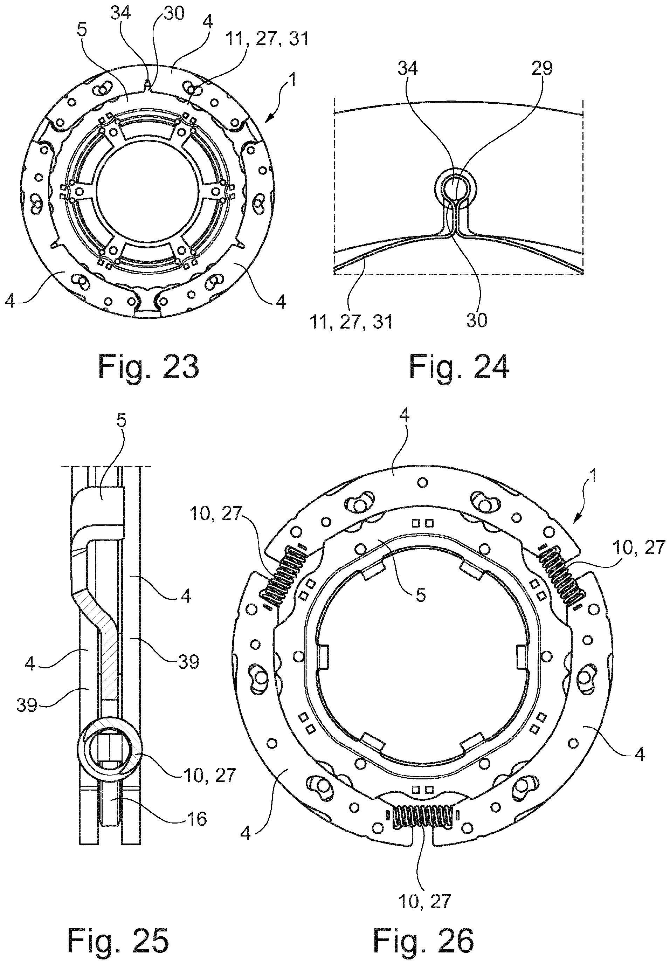

Fig. 23 und 24 zeigen ein zehntes Beispiel eines Fliehkraftpendels 1. In Vergleich zum achten und neunten Beispiel ist hier ein einziges Stabelement 31 als Radialkraftelement 11 eingesetzt, welches mit entsprechenden Ösen 30 in entsprechenden Aussparungen 34 und/oder dort ausgebildeten zentralen Bolzen 29 der Pendelmassen 5 eingehängt ist.

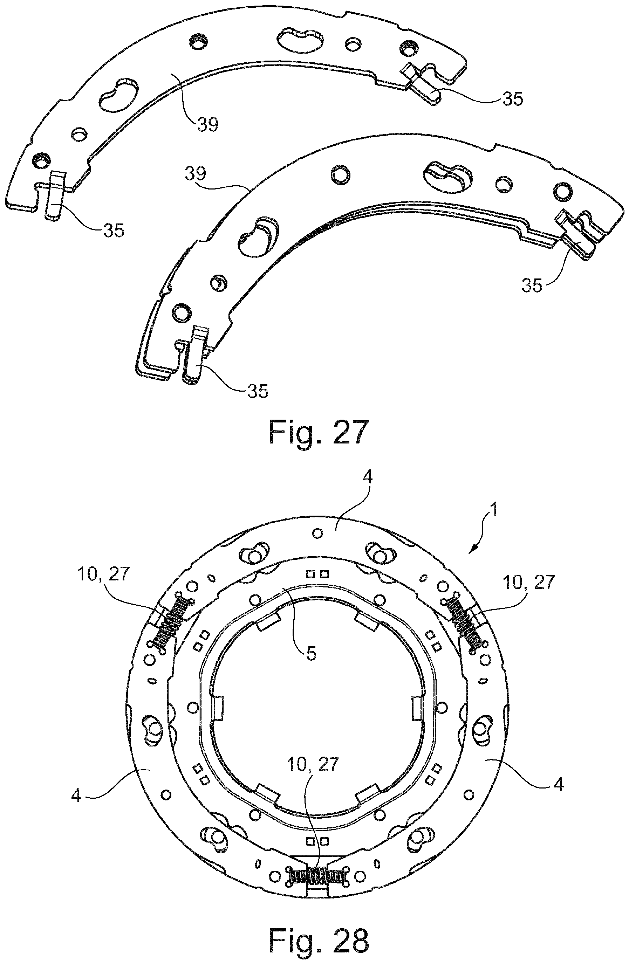

Die Fig. 25 bis 27 zeigen ein elftes Beispiel eines Fliehkraftpendels 1, welches Spiralfedern 10 als Federelemente 27 eines Radialkraftelements 11 einsetzt. Diese sind jeweils zwischen zwei in Umfangsrichtung benachbarten Pendelmassen 4 ausgebildet. Durch die Ausbildung zwischen allen Pendelmassen 4 entsteht ein Radialkraftelement 11, welches eine Radialkraft radial nach außen auf die jeweiligen Pendelmassen 4 ausübt. Die Spiralfedern 10 sind dabei an ihren Enden auf entsprechende Haken 35 der Pendelmassen 4 aufgeschoben, die insbesondere in Fig. 27 zu sehen sind. Die Pendelmassen 4 weisen an beiden umfangsseitigen Enden Haken 35 auf. Die Pendelmassen 4 sind hier - wie auch in den anderen Beispielen jeweils aus mehreren Teilelementen 39 ausgebildet, die in axialer Richtung versetzt zueinander angeordnet sind.

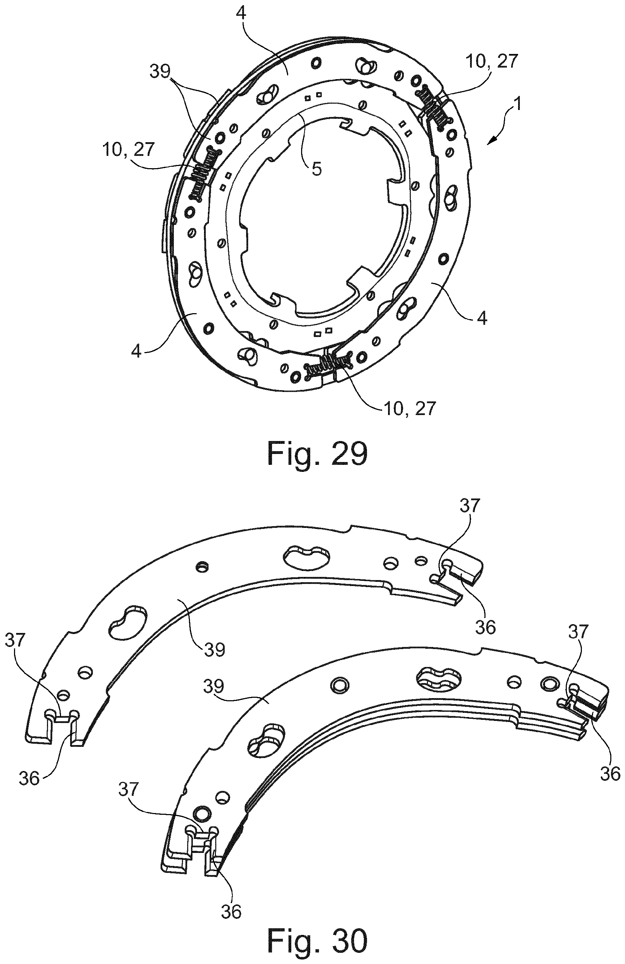

Das in den Figuren 28 bis 30 gezeigte zwölfte Beispiel eines Fliehkraftpendels 1 unterscheidet sich vom elften Beispiel eines Fliehkraftpendels 1 dadurch, dass keine vergleichsweise langen Haken 35 in die Spiralfedern 10 eingreifen, sondern die Spiralfedern 10 in entsprechende Aufnahmen 36 eingreifen. Die Aufnahmen 36 weisen zusätzlich eine Fixierung 37 für das jeweilige Ende der Spiralfeder 10 auf. Zudem weisen die Spiralfedern 10 einen im Bereich zwischen den Pendelmassen 4 eine sprunghafte Vergrößerung ihres Durchmessers auf.

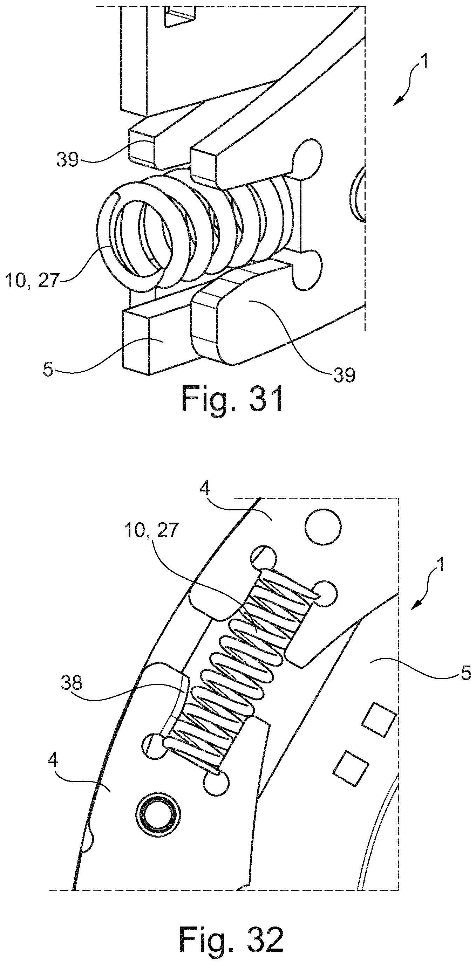

Fig. 31 und 32 zeigen ein dreizehntes Beispiel eines Fliehkraftpendels 1. Im Unterschied zum elften und zwölften Beispiel weisen die Spiralfedern 10 hier einen gleichmäßigen Durchmesser auf. Die Spiralfedern 10 sind in Aufnahmen 36 der Pendelmassen 4 aufgenommen, die nach außen eine so genannte Überhöhung 38 aufweisen. Unter einer Überhöhung wird dabei verstanden, dass der Innenradius der Aufnahmen 36 größer ist als der Außenradius der Spiralfeder 10. Die Überhöhung 38 führt zu einer Reduktion der Reibung zwischen Spiralfeder 10 und Aufnahmen 36 im Betrieb des Fliehkraftpendels 1.

Das Fliehkraftpendel 1 erlaubt in vorteilhafter Weise eine bauraumneutrale Vergrößerung des Rückstellmoments M des Fliehkraftpendels 1. So kann eine verbesserte Dämpfung von Schwingungsmoden bauraumneutral erreicht werden, wie insbesondere beim Einsatz in Kraftfahrzeugen 21 und deren Kupplungen 24 vorteilhaft ist.

### Bezugzeichenliste

1    Fliehkraftpendel
2    rotierende Masse

3 Drehachse
4 Pendelmasse
5 Pendelflansch
6 Umfangsrichtung
7 Zentrum
8 außenliegende Rolle
9 Führungskontur
10 Spiralfeder
11 Radialkraftelement
12 Führungskontur
13 Stift
14 Zentrallager
15 Kontaktfläche
16 Rolle
17 Blattfeder
18 Führung
19 erster Verlauf
20 zweiter Verlauf
21 Kraftfahrzeug
22 Antriebseinheit
23 Abtriebswelle
24 Kupplung
25 Antriebsstrang
26 Schneckenfeder
27 Federelement
28 Blattfeder
29 mittlerer Bolzen
30 Öse
31 Stabelement
32 Ende
33 Vorsprung
34 Aussparung
35 Haken
36 Aufnahme
37 Fixierung
38 Überhöhung
39 Teilelement

M Rückstellmoment
m Masse (Pendelmasse inklusive Nieten und Rollen)
d Wirkradius bei 0° Schwingwinkel
R Radius bis zur Pendelrollenmitte
$\Omega$ Winkelgeschwindigkeit
$\varphi$ Auslenkwinkel
F Kraft
$F_{zf}$ Zentrifugalkraft
$F_R$ Radialkraft

**Patentansprüche**

1. Fliehkraftpendel (1) mit einem um eine Drehachse (3) drehbaren Pendelflansch (5) und mehreren über den Umfang verteilten, gegenüber dem Pendelflansch (5) begrenzt verschwenkbaren Pendelmassen (4), wobei mindestens eine Pendelmasse (4) ein Radialkraftelement (11) aufweist, über welches eine radial nach außen wirkende Radialkraft ($F_R$) auf ein in Umfangsrichtung (6) betrachtetes Zentrum (7) der Pendelmasse (4) aufbringbar ist, **dadurch gekennzeichnet, dass** das Radialkraftelement (11) eine Führungskontur (12) zur Führung eines zentralen Verbindungselementes der Pendelmasse (4) mit dem Pendelflansch (5) aufweist und die Führungskontur (12) so ausgebildet ist, dass ein vorgebbarer Verlauf der Radialkraft ($F_R$) in Abhängigkeit vom Auslenkwinkel ($\varphi$) des Verbindungselementes erreicht wird.

2. Fliehkraftpendel (1) nach Anspruch 1, bei dem das Radialkraftelement (11) mindestens ein Federelement (27) aufweist.

3. Fliehkraftpendel (1) nach einem der vorhergehenden Ansprüche, bei dem das Radialkraftelement (11) in der Führung eines zentralen Verbindungselementes der Pendelmasse mit dem Pendelflansch ausgebildet ist.

4. Fliehkraftpendel (1) nach einem der vorhergehenden Ansprüche, bei dem das Radialkraftelement (11) mindestens ein Federelement (27) ausgewählt aus mindestens einer der folgenden Federn umfasst:

   a) mindestens eine Blattfeder (17) ;
   b) mindestens eine Spiralfeder (10); und
   c) mindestens eine Schneckenfeder (26).

5. Fliehkraftpendel (1) nach einem der vorhergehenden Ansprüche, bei dem das Radialkraftelement (11) mindestens ein Federelement (27) aufweist, welches zumindest zwei in Umfangsrichtung (6) benachbarte Pendelmassen (4) miteinander koppelt.

6. Reibkupplung (24), umfassend mindestens ein Fliehkraftpendel (1) nach einem der vorhergehenden Ansprüche.

7. Kraftfahrzeug (22) aufweisend eine Antriebseinheit (23) mit einer Abtriebswelle (24), einem Antriebsstrang (25) und einer Kupplung (26) zum lösbaren Verbinden der Abtriebswelle (24) mit dem Antriebsstrang (25), wobei die Kupplung (26) mindestens ein Fliehkraftpendel (1) nach einem der Ansprüche 1 bis 5 aufweist.

**Claims**

1. Centrifugal pendulum (1) having a pendulum flange (5) which can be rotated about an axis of rotation (3) and a plurality of pendulum masses (4) which are distributed over the circumference and which can be pivoted with respect to the pendulum flange (5) to a limited degree, wherein at least one pendulum mass (4) has a radial force element (11) via which a radially outwardly acting radial force ($F_R$) can be applied to a centre (7) of the pendulum mass (4) as considered in the circumferential direction (6), **characterized in that** the radial force element (11) has a guide contour (12) for guiding a central connecting element of the pendulum mass (4) with the pendulum flange (5), and the guide contour (12) is formed in such a way that a predeterminable profile of the radial force ($F_R$) is achieved in dependence on the deflection angle ($\varphi$) of the connecting element.

2. Centrifugal pendulum (1) according to Claim 1, in which the radial force element (11) has at least one spring element (27).

3. Centrifugal pendulum (1) according to either of the preceding claims, in which the radial force element (11) is formed in the guide of a central connecting element of the pendulum mass with the pendulum flange.

4. Centrifugal pendulum (1) according to one of the preceding claims, in which the radial force element (11) comprises at least one spring element (27) selected from at least one of the following springs:

   a) at least one leaf spring (17);
   b) at least one helical spring (10); and
   c) at least one spiral spring (26).

5. Centrifugal pendulum (1) according to one of the preceding claims, in which the radial force element (11) has at least one spring element (27) which couples together at least two pendulum masses (4) which are adjacent in the circumferential direction (6) .

6. Friction clutch (24), comprising at least one centrifugal pendulum (1) according to one of the preceding claims.

7. Motor vehicle (22) having a drive unit (23) with an output shaft (24), a drive train (25) and a clutch (26) for releasably connecting the output shaft (24) to the drive train (25), wherein the clutch (26) has at least one centrifugal pendulum (1) according to one of Claims 1 to 5.

**Revendications**

1. Pendule à force centrifuge (1) comprenant une bride de pendule (5) pouvant tourner autour d'un axe de rotation (3) et plusieurs masses de pendule (4) réparties sur la périphérie, pouvant pivoter de manière limitée par rapport à la bride de pendule (5), au moins une masse de pendule (4) présentant un élément à force radiale (11) par le biais duquel une force radiale

($F_R$) agissant radialement vers l'extérieur peut être appliquée sur un centre (7) de la masse de pendule (4), considéré dans la direction périphérique (6), **caractérisé en ce que** l'élément à force radiale (11) présente un contour de guidage (12) pour guider un élément de connexion central de la masse de pendule (4) avec la bride de pendule (5) et le contour de guidage (12) est réalisé de telle sorte que l'on obtienne une allure prédéfinissable de la force radiale ($F_R$) en fonction d'un angle de déviation ($\varphi$) de l'élément de connexion.

2. Pendule à force centrifuge (1) selon la revendication 1, dans lequel l'élément à force radiale (11) présente au moins un élément de ressort (27).

3. Pendule à force centrifuge (1) selon l'une quelconque des revendications précédentes, dans lequel l'élément à force radiale (11) est réalisé dans le guidage d'un élément de connexion central de la masse de pendule avec la bride de pendule.

4. Pendule à force centrifuge (1) selon l'une quelconque des revendications précédentes, dans lequel l'élément à force radiale (11) comprend au moins un élément de ressort (27) choisi parmi au moins l'un des ressorts suivants :

   a) au moins un ressort à lame (17) ;
   b) au moins un ressort spiral (10) ; et
   c) au moins un ressort hélicoïdal (26).

5. Pendule à force centrifuge (1) selon l'une quelconque des revendications précédentes, dans lequel l'élément à force radiale (11) présente au moins un élément de ressort (27) qui accouple l'une à l'autre au moins deux masses de pendule (4) adjacentes dans la direction périphérique (6).

6. Embrayage à friction (24), comprenant au moins un pendule à force centrifuge (1) selon l'une quelconque des revendications précédentes.

7. Véhicule automobile (22) présentant une unité d'entraînement (23) avec un arbre de prise de force (24), une chaîne cinématique (25) et un embrayage (26) pour la connexion amovible de l'arbre de prise de force (24) avec la chaîne cinématique (25), l'embrayage (26) présentant au moins un pendule à force centrifuge (1) selon l'une quelconque des revendications 1 à 5.

$$f_0 = \frac{\Omega}{2 \cdot \pi} \sqrt{\frac{R}{L}}$$

$$F = md\Omega^2$$

Primär

Sekundär

Fliehkraftpendel

## Fig. 1

## Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

Fig. 15

## Fig. 16

## Fig. 17

## Fig. 18

Fig. 19

Fig. 20

Fig. 21

Fig. 22

Fig. 23

Fig. 24

Fig. 25

Fig. 26

Fig. 27

Fig. 28

Fig. 29

Fig. 30

39

10, 27

5

39

## Fig. 31

4

10, 27

1

38

5

4

## Fig. 32

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011100895 A1